# EUROPEAN PATENT SPECIFICATION

(11) **EP 2 750 518 B1**
(45) Date of publication and mention of the grant of the patent: **20.05.2020**
(21) Application number: 12759310.1
(22) Date of filing: 30.08.2012
(51) Int. Cl.: A23K 50/40, A23K 20/00, A23K 20/158

(54) **COMPOSITIONS AND METHODS FOR PROVIDING A LIFE-STAGE APPROPRIATE ANIMAL DIET**
ZUSAMMENSETZUNGEN UND VERFAHREN FÜR EINE DER JEWEILIGEN LEBENSPHASE ANGEPASSTE DIÄT EINES TIERES
COMPOSITIONS ET PROCÉDÉS PERMETTANT D'APPORTER À DES ANIMAUX UN RÉGIME ALIMENTAIRE ADAPTÉ À LEUR STADE DE MATURATION

(30) Priority: 01.09.2011 US 201113223943
(43) Date of publication of application: 09.07.2014
(73) Proprietor: IAMS Europe B.V., 7742 PB Coevorden (NL)
(72) Inventor: FOY, Julie, Marie, Mason, OH 45040 (US); GREY, Rebecca, Massie, West Alexandria, OH 45381 (US); REED, Thomas, Wendell, Deerfield Township, OH 45040 (US); MYRIE, Leslie, Rolce, Deerfield Township, OH 45040 (US); ROMANACH, Benito, Alberto, Mason, OH 45040 (US); BOEBEL, Katherine, P., West Alexandria, OH 45381 (US); CARNAGEY, Kristen, M., Mason, OH 45040 (US); WESTENDORF, Roxanne, Drago, Colerain Township, OH 45252 (US)
(74) Representative: Zimmermann & Partner Patentanwälte mbB
(86) International application number: PCT/US2012/052953
(87) International publication number: WO 2013/033276

(56) References cited:
- WO-A1-2006/044572
- WO-A1-2010/009458
- WO-A1-2010/009468
- WO-A2-03/008973
- WO-A2-2006/074089
- US-A1- 2004 068 010
- Anonymous: "Lifestage - The natural choice for a lifetime of health", JOLLYES PETFOOD SUPERSTORE , 31 December 2010 (2010-12-31), XP002684982, Retrieved from the Internet: URL:http://www.jollyes.co.uk/lifestage [retrieved on 2012-10-10]
- Anonymous: "Life-stage foods for pets", Pet Food Manufacturers' Association , 31 January 2011 (2011-01-31), XP002684983, Retrieved from the Internet: URL:http://www.pfma.org.uk/_assets/images/ general/file/Lifestage%20Nutrition%20Jan%2 02011.pdf [retrieved on 2012-10-10]
- LAUTEN SUSAN D: "Nutritional risks to large-breed dogs: From weaning to the geriatric years", VETERINARY CLINICS OF NORTH AMERICA: SMALL ANIMAL PRACTICE, vol. 36, no. 6, 1 November 2006 (2006-11-01), pages 1345-1359, XP008157601, SAUNDERS, PHILADELPHIA, US ISSN: 0195-5616
- JEUSETTE I ET AL: "Les besoins du chat à différents stades physiologiques - Les aliments du cycle de la vie : I. Le chat à l'entretien [Nutrient requirements of cat at different lifestages: Food for cycle of life. 1. The adult cat at maintenance.]", ANNALES DE MEDICINE VETERINAIRE, vol. 145, no. 3, 1 August 2001 (2001-08-01), pages 190-201, XP008157042, FACULTE DE MEDECINE VETERINAIRE, LIEGE, BE ISSN: 0003-4118
- JEUSETTE I ET AL: "[Nutrient requirements of cat at different lifestages: Food for the cycle of life II. Overweight, growth and old age] Les besoins du chat à différents stades physiologiques - Les aliments du cycle de la vie : II. Le chat présentant un excès pondéral, le chaton et le chat senior", ANNALES DE MEDICINE VETERINAIRE, vol. 145, no. 4, 1 September 2001 (2001-09-01), pages 244-258, XP008157603, FACULTE DE MEDECINE VETERINAIRE, LIEGE, BE ISSN: 0003-4118
- MORRIS J G ET AL: "ASSESSMENT OF THE NUTRITIONAL ADEQUACY OF PET FOODS THROUGH THE LIFE CYCLE", THE JOURNAL OF NUTRITION, vol. 124, no. SUPPL. 12, 1 January 1994 (1994-01-01), pages 2520S-2534S, XP009044193, WISTAR INSTITUTE OF ANATOMY AND BIOLOGY ISSN: 0022-3166
- Anonymous: "F.E.D.I.A.F. NUTRITIONAL GUIDELINES FOR COMPLETE AND COMPLEMENTARY PET FOOD FOR CATS AND DOGS", , 1 August 2011 (2011-08-01), XP055425531, Retrieved from the Internet: URL:http://www.nutricao.vet.br/pdfs/FEDIAF _Nutritional_Guidelines_-_final_version_6- 09-11.pdf [retrieved on 2017-11-15]
- Dicksons Pet Food: "Just Delicious Offer", OUR DOGS, 5 August 2011 (2011-08-05), pages 18-18, XP55314245, Retrieved from the Internet: URL:www.ourdogs.co.uk [retrieved on 2016-10-26]

## Description

### HELD OF THE INVENTION

The invention relates generally to compositions for providing a life-stage-appropriate animal diet.

### BACKGROUND OF THE INVENTION

It has been recognized in many species of animals that dietary needs change over an animal's life span in predictable ways. The most obvious of these may be the needs of nursing animals as opposed to weaned animals. However, many aspects of an animal's ideal diet may change over time after weaning. As examples, caloric requirements, or the desired ratio of different caloric sources (such as fats and proteins), or the caloric density of a diet may change as an animal progresses from adolescence to maturity. Recently, it has been recognized that many animals have different dietary needs at different stages of maturity. Beyond apparent, special needs, such as needs arising from illness or physical deficits (such as missing teeth), an animal's diet may desirably include different nutrients or different amounts of nutrients as the animal ages. Specialized diets may help to encourage healthy growth, maintain healthy weight, and prevent or delay physical and/or mental, age-related decline.

Prior attempts to market companion animal diets, such as dog and cat foods, for a "Senior" life stage have had limited success. Caretakers for companion animals may be reluctant to purchase a diet for a life-stage that suggests an animal is in decline or nearing the end of its lifespan. In some instances, this reluctance may be tied to a desire to deny the approaching end of the animal's life. In other instances, the reluctance to purchase a diet in a late life-stage may be due to cognitive dissonance between the concept that a companion animal is old and the animal's activity level or general health. That is, it may be easier to purchase a "Senior" diet for an animal who is inactive or ill than it is to purchase the same diet for an animal of the same age who remains active and in generally good health. However, improper diet selection may exacerbate existing health problems, or deny an animal the potential benefits of a diet that could prevent, mitigate, or even reverse undesirable signs of aging.

There remains a need for a diet that addresses the different life-stages of animals, such as dogs or cats. There remains a need for a system that facilitates the selection of a life-stage-appropriate diet for an animal.

The article "Lifestage - The natural choice for a lifetime of health" (31 December 2010) relates to a range of pet foods that have been formulated to provide optimum nutrition.

Document WO 03/008973 relates to a diagnostic marker.

Document WO 2006/044572 A1 relates to regiments and methods adapted for a juvenile pet.

The article "Life-stage foods for pets" (31 January 2011) relates to the practice of feeding pets specific foods designed to meet their needs.

The article "Just delicious Offer" (5 August 2011) relates to dog food packages which are intended for 3 different life stages.

Document US 2004/068010 A1 relates to methods of using omega-3 fatty acids.

The article "F.E.D.I.A.F Nutritional guidelines for complete and complementary pet food for cats and dogs" (5 August 2011) provides pet food formulations.

Document WO 2006/074089 A2 relates to methods for enhancing the quality of life of a senior animal.

Document WO 2010/009458 A1 relates to methods for enhancing the quality of life of a senior animal.

### SUMMARY OF THE INVENTION

The present invention relates to an array of diets for an animal as defined in claim 1.

The indicia may be selected from the group consisting of icons, drawings, and photographs. The indicium of the first package may comprise the human being and an animal engaged in an activity characteristic of the first animal life stage.

Each of the first, second, and third diets may comprise a second nutrient at a first, second, and third level, respectively. Each of the first, second, and third diets may comprise a third nutrient at a first, second, and third level, respectively. The array may comprise a fourth diet. The fourth diet may comprise a fourth level of the nutrient. The fourth level of the nutrient may be suitable for a fourth animal life stage. The fourth diet may be disposed in a fourth package. The fourth package may comprise an indicium. The indicium of the fourth package may comprise an image of a human being in a life stage comparable to the fourth animal stage of life.

At least one of the first, second, third, and fourth levels of a nutrient may be zero. Each of the first, second, third, and fourth diets may comprise a second nutrient at a first, second, third, and fourth level, respectively. Each of the first, second, third, and fourth diets may comprise a third nutrient at a first, second, third, and fourth level, respectively. The human being of the indicium of the first package, the indicium of the second package, and the indicium of the third package, may be the same human being.

In some aspects, not pertaining to the invention, the present disclosure relates to a method for facilitating the selection of a life-stage appropriate diet for an animal. The method may comprise providing an array of diets for an animal. The diets may be nutritionally tailored to at least three life stages of the animal. Each of the diets may be disposed in a package. The method may comprise associating each package with an indicium. The indicium may comprise an image of a human being. The human being may be in a life stage comparable to the life stage of the animal for which the diet inside the package is nutritionally tailored. The indicia may comprise an image of an animal in a life stage comparable to the life stage of the animal for which the diet inside the package is nutritionally tailored. The indicia may comprise an image of the human being interacting with the animal in a manner characteristic of the life stage of the animal for which the diet inside the package is nutritionally tailored.

The array may comprise at least four distinct diets. The array may comprise at least six distinct diets. The animal may be a dog or a cat. The human being of each indicium may be the same human being. The animal of each indicium may be the same animal.

### BRIEF DESCRIPTION OF THE DRAWINGS

FIG. 1 is an exemplary indicium comprising an image of a dog.
FIG. 2 is an exemplary indicium comprising an image of a cat.

### DETAILED DESCRIPTION OF THE INVENTION

When presented with an array of animal diets for animals of different life stages, consumers may have a difficult time selecting the appropriate diet for a specific animal. This difficulty may be unrelated to the text labeling on the package. For example, a consumer may have no problem reading words such as "Puppy," "Adult," "Mature," and "Senior," on different bags, or even reading corresponding information, such as age charts, but may still have difficulty in choosing an appropriate product. As a more specific example, a consumer may be unmotivated to purchase "Mature" or "Senior" food for a mature or senior dog not because of a lack of comprehension of the text, but because the name given to a life stage does not seem appropriate, or because an animal seems younger or healthier than a representative animal of the same species and age. This problem may be exacerbated because dietary changes may be most helpful in preventing age-related deterioration, rather than trying to "undo" problems after they arise. That is, a life stage may correspond with dietary needs that are not visible even to a concerned, attentive caregiver. Accordingly, the selection of an appropriate diet may be difficult even with textual tools for selecting a product from an array of diets.

In some aspects, the present disclosure relates to an array of diets suitable for animals of a given species at different ages or stages of maturity. In some aspects, the present disclosure relates to an array of diets for facilitating the selection of an age-appropriate diet for an animal. In some studies, increasing the number of diets in the array from two or three diets to three or four diets and providing contextual information about animal life stages, may double or more than double the number of caregivers who select a life-stage appropriate diet for a given animal.

As used herein "nutrient" refers to any desired dietary substance, including, without limitation, vitamins, minerals, proteins, amino acids, fatty acids, fats, carbohydrates, fiber and fiber-sources, starches, co-vitamins, drugs or medications, and the like. "Nutrient" may, where so described, refer to a particular ratio of substances, such as, for example, the ratio of omega-6 fatty acids to omega-3 fatty acids, or the ratio of insoluble fiber to soluble fiber. As used herein, "nutrient" does not extend to palatants, flavorings, colorants, or other additives which may be used to differentiate animal diets with no significant change in the nutritional value of the diets.

As discussed above, nutrition requirements may change significantly as an animal matures. Different levels of various nutrients, or different nutrients altogether, may be required at different life stages. As used herein, "life stage" or "stage" refers to an approximate span of years generally associated with a particular phase of growth, stasis, or decline for a particular species. Although any individual animal within the specified years of age may exhibit none or fewer than all of the typical characteristics of a given life stage, the life stage overall is a description of a typical experience for most animals of the same species and/or breed.

Dogs, for example may have a puppy life stage generally associated with dogs 0 to 1.25 years of age for small breeds (average less than 20 pounds or about 9.1kg when full grown) and dogs 0-2 years of age for large breeds (average greater than 50 pounds or about 23kg when full grown). Dogs may have an adult life stage generally associated with dogs 2 to 7 years of age, and a mature life stage generally associated with dogs 7 years of age or older. A fourth life stage may also be identified, referred to herein as "Senior", and referring to dogs 11 years of age or older (9 years or older for large breeds). When a fourth life stage is introduced, the mature life stage may refer to dogs 7 to 11 years of age. It should be understood that these age ranges are exemplary and may vary. In particular, the age ranges for each life stage may vary if a diet is directed to a specific size or breed of dog. For example, small and large dogs may age differently, and thus may progress through different life stages at different absolute ages. Further, depending on the specific nutrients varied in the diet, the age range associated with a particular life stage may vary, as some nutrients may be needed at different or overlapping phases relative to the life stage age ranges described herein.

By way of more particular examples, the following table shows how life stages might be adjusted for dogs of different sizes and/or breeds. It should be understood that an age or weight of 0 (zero) refers to a dog so young or so light that its age and/or weight rounds to zero, and is not meant to encompass "dogs" that do not exist (i.e., "dogs" of actual zero age and/or actual zero mass).

**Table 1. Exemplary Age Ranges (in years) for Life Stages for Dogs of Different Sizes**

| Size → | Small | Medium | Large | Giant |
|---|---|---|---|---|
| Stage↓ | 0 to 20 pounds | 21-50 pounds | 51-100 pounds | Over 90 pounds |
| Puppy | 0-1 | 0-1 | 0-1.5 | 0-2 |
| Adult | 1-7 | 1-7 | 1.5-6 | 2-5 |
| Mature (Mature, if a Senior life stage is also defined) | 7+ (7-11) | 7+ (7-10) | 6+ (6-8) | 5+ (5-7) |
| Senior | 11+ | 10+ | 8+ | 7+ |

Cats, as another example, may have slightly different life stages, with a kitten (or pediatric) stage generally associated with cats 0 to 1 year of age; and an adult stage generally associated with cats 1 to 7 years of age. Cats may have a mature stage generally associated with cats 7 years of age or greater. A fourth life stage may also be identified, referred to herein as "Senior", and referring to cats 11 years of age or older. When a fourth life stage is introduced, the mature life stage may refer to cats 7 to 11 years of age. As with dogs, cat life stages may correspond to different age ranges under some circumstances. For example, certain breeds of cats may exhibit different life stage progression patterns, or some specific nutrients may be needed at different or overlapping phases relative to the life stage age ranges described herein.

These life stages may go by different names, such as pediatric, maintenance, geriatric, growth, etc., but these fundamental age divisions are believed to represent key inflection points in an animal's dietary needs. Dietary needs may change because of the nature of the nutrients required. For example, diets for a puppy/kitten life stage may have a relatively high concentration of fat content and caloric density to support rapid growth, including rapid neuron development. Diets for an adult phase may have relatively lower fat content and caloric density, relative to a puppy/kitten diet, and diets for a mature phase may have still lower fat content and caloric density. In contrast, a diet for a senior phase may have similar or slightly higher fat content and greater caloric density than a diet for mature phase, to provide sufficient caloric intake for weight maintenance accounting for appetite, which typically decreases with advanced age. Senior diets may comprise relatively high amounts of vitamin E, to support immune function, as well as other antioxidants, to support general cellular response to environmental stressors (including UV exposure, toxin accumulation, etc.) that build over time. Diets throughout the array may include probiotics or prebiotics, with different strains or quantities available in different diets.

Entirely different nutrients may be included in some life stage diets and excluded from other life stage diets. For example, puppy/kitten and/or adult stage diets may include DHA (docosahexaenoic acid) and/or EPA (eicosapentaenoic acid), which are fatty acids associated with healthy neuron growth and development. Adult and/or mature diets may comprise less DHA and/or EPA. For example, adult and mature may not have any supplemental DHA and/or EPA (e.g., any DHA or EPA added apart from what is included in the ingredients in the food, such as meat, grains, vegetables, and the like). In some arrays, a senior diet may have relatively higher DHA and/or EPA content than an adult or mature diet, to help maintain cognitive function with advancing age. In some arrays, adult, mature, and/or senior diets may comprise 1-carnitine for healthy weight maintenance, whereas a puppy diet may have no 1-carnitine. Similarly, in some arrays, adult, mature, and/or senior diets may comprise glucosamine and/or chondroitin sulphate for joint and cartilage support (respectively), whereas a puppy diet may have no glucosamine and/or chondroitin sulphate. Mature and/or senior diets may include nutrients or other additives intended to support cognitive maintenance, joint maintenance, dental health, skin lubrication, hair maintenance and/or luster, digestive health, and the like, which may be different from the nutrients needed for healthy development.

Over the four life stages, some nutrients may be increased progressively from puppy/kitten to adult to mature to senior. For example, the percentage of total fiber content that comes from low or moderately-fermentable fibers, such as beet pulp or fructooligosaccharides (FOS) may increase progressively along three or four life stage diets. Fiber fermentability may be assessed *in vitro* as described, for example, in Sunvold, et al., Dietary fiber for Dogs: IV. In vitro fermentation of selected fiber sources by dog fecal inoculums and in vivo digestion and metabolism of fiber-supplemented diets, J ANIM SCI 1995, 73:1099-1109. As used herein, low or moderately-fermentable fibers are those that show a total SCFA (short chain fatty acid) production after 24 hours of less than or equal to 5 mmol/g of organic matter. In some embodiments, the ratio of insoluble fiber to soluble fiber in the diet may be higher at one or more later life stages, relative to one or more earlier life stages.

Of course, the nutritional benefits of a diet tailored to a specific life stage can only be realized when a life-stage appropriate diet is provided to an animal. Feeding a puppy low-calorie weight maintenance diet intended for a later life stage might not be as beneficial as feeding a puppy a calorie-dense puppy diet. Similarly, feeding a mature dog a high-calorie puppy diet may exacerbate weight maintenance problems, which may in turn exacerbate other signs of aging, such as reduced mobility or increased joint pain. When choosing a diet, however, an animal's caregiver may be influenced by perceptions that negatively impact the caregiver's ability to select an appropriate diet. It has been found that these perceptions can be overcome for a large number of caregivers by presenting an array of life-stage diets with "humanizing" context. That is, caregivers respond favorably to the observation that humans eat differently at different life stages, without regard to illness or incapacity. That is, healthy, active "seniors" may eat differently than children, even though they are healthy and living full, vibrant lives. The exact mechanism is not fully understood, but this anthropomorphic connection between human caregivers and the animal may help overcome an initial-effoneous-perception that mature or senior diets are for dogs in noticeable decline, e.g., that are noticeably sickly or decrepit.

Some caregivers will select an animal diet from a store shelf without the benefit of consultation with a nutritionist or veterinarian, or even an extended textual explanation which may provide a helpful anthropomorphic connection. Accordingly, an array of diets tailored to different life stages may be provided with indicia to help humanize the animal life stages and facilitate selection of an age-appropriate diet. In some embodiments, the array comprises first, second, and third diets. In some embodiments, the array comprises a fourth diet. The first, second, third, and, if present, fourth diets may each be tailored to a specific animal life stage, at least with regard to the level of a certain nutrient. The first, second, third, and, if present, fourth diet may comprise profiles of two, three, or more nutrients, each of the profiles tailored to changing dietary needs over the three or four life stages. In some embodiments, five or six life-stage appropriate diets are presented. The additional life stages may reflect further sub-divisions of the puppy life stage, reflecting a growth curve during the first and/or second years of life, with somewhat different caloric density and nutrient requirements during each sub-division of the puppy life stage.

Each of the first, second, and third diets may comprise first, second, and third levels, respectively, of a given nutrient, each of the levels suitable for a first, second, and third animal life stage, respectively. The given nutrient may be selected, for example, from 1-carnitine, low- or moderately-fermentable fiber, total fiber content, total protein content, vitamin E, vitamin C, other antioxidants, vitamin A, beta-carotene, lutein, taurine, fatty acids, the ratio of omega-6 to omega-3 fatty acids, glucosamine, chondroitin sulphate, DHA, EPA, caloric density, calcium, phosphorous, magnesium, lysine, sodium hexametaphosphates, a calorie restriction mimetic (such as mannoheptulose), anti-inflammatory compounds, a probiotic, a prebiotic, sodium bisulfate, low glycemic index starches, high glycemic index starches, or combinations thereof. The first, second, and third levels (and fourth, fifth, and sixth levels, if fourth, fifth, and sixth diets are present in the array) may each be different, or two or more levels may be the same, but at least one of the levels is different within the array. Table 2 provides more detailed, exemplary embodiments showing how certain nutrients might vary in an array of diets nutritionally tailored to different animal life stages. It should be understood that any single nutrient or any combination of nutrients shown in Table 2 might be present in a specific array of diets.

**Table 2. Exemplary Nutrient Profiles for Dog Diets in Three or Four Life Stages**

| **Nutrient** | **Mature Absolute** | **Index Versus Mature Life Stage (%)** | | | |
|---|---|---|---|---|---|
| | | **Puppy** | **Adult** | **Mature** | **Senior** |
| ME kcal/kg diet - Med through Giant Breed | 3300 - 3700 | 110 - 130 | 102 - 115 | 100 | 102 - 110 |
| ME kcal/kg diet - Small Breeds | 3600 - 3800 | 110 - 115 | 105 - 110 | 100 | 100 - 110 |
| Protein g / 1000 kcal ME | 70 - 80 | 104 - 110 | 90-98 | 100 | 102 - 110 |
| DHA (mg/100g diet) | 0.01 - 0.10 | 200 - 2000, or 500 - 1800 | 50-90 | 100 | 200-2000, or 500 - 1800 |
| Vitamin E (IU/kg) | 280 - 500 | 20-70 | 20-70 | 100 | 100 - 200 |
| Supplemental L-carnitine (mg/kg diet) | 50 - 100 | 0-50 | 0-100, or 0 - 70 | 100 | 100 - 200 |
| Beta-carotene (mg/kg diet) | 20-40 | 1 - 20 | 1 - 20 | 100 | 100 - 150 |
| Crude Fiber, % | 2.0-3.0 | 50 - 80 | 60 - 90 | 100 | 90 - 140 |
| Beet Pulp (%) | 2.5 - 4.0 | 70-90 | 60 - 90 | 100 | 110 - 150 |

**Table 3. Exemplary Nutrient Profiles for Cat Diets in Three or Four Life Stages**

| | **Mature Absolute** | **Adult Absolute** | **Index Versus Mature Life Stage (%)** | | | |
|---|---|---|---|---|---|---|
| | | | **Kitten** | **Adult** | **Mature** | **Senior** |
| ME kcal/kg diet | 3500 - 3900 | --- | 103 - 115 | 100- 105 | 100 | 105 - 115 |
| Protein g / 1000 kcal ME | 90 - 95 | --- | 90 - 100 | 95-100 | 100 | 90- 105, or 90 - 99 |
| Lysine g / 1000 kcal ME | 5 - 6 | --- | 90 - 99 | 95 - 100 | 100 | 105 - 135 |
| DHA (mg/100g diet) | 0.06 - 0.16 | --- | 170 - 200 | 50-90 | 100 | 150 - 250 |
| Vitamin E (IU/kg) | 475 - 550 | --- | 35 - 60 | 35-60 | 100 | 100 - 200 |
| Supplemental L-carnitine (mg/kg diet) | 50 | --- | 0 - 50 | 0 -100, or 0 - 70 | 100 | 100 - 200 |
| Crude Fiber, % | 1.5 - 1.8 | --- | 100 - 115 | 100 - 115 | 100 | 105 - 130 |
| Beet Pulp (%) | 2.5 - 3.0 | --- | 100 - 120 | 100 - 120 | 100 | 130 - 160 |
| Sodium Bisulfate (in percent relative to Adult) | 0 | 0.8 | 0 | 100 | 0 | 0 |

Each of the first, second, and third diets may be disposed in a first, second, and third package, respectively. Each of the first, second, and third packages may comprise an indicium. Each indicium may comprise an image of a human being. The human being may be in a life stage comparable to the animal life stage of the diet inside the package. Based on the life stages provided above, exemplary human life stages, in years of age, may be as presented Tables 4 and 5.

**Table 4. Exemplary Correspondence between Animal and Human Life Stages for Dogs (all ages in years)**

| **Stage and age→** | **Puppy** | **Adult** | **Mature** | **Senior** |
|---|---|---|---|---|
| **Corresponding Human age↓** | **0-1 (S/M)/0-2 (L)** | **2-7** | **7-11** | **11+** |
| **Analogous human age range (Small/Medium Dog)** | 0-15 | 15-44 | 44-60 | 60+ |
| **Analogous human age range (Large Dog)** | 0-24 | 24-50 | 50-61 | 61+ |
| **Exemplary human age** | 5 | 30 | 50 | 70 |

**Table 5. Exemplary Correspondence between Animal and Human Life Stages for Cats (all ages in years)**

| **Stage and**: | **Kitten** | **Adult** | **Mature** | **Senior** |
|---|---|---|---|---|
| **cat age** | **0-1** | **1-7** | **7-11** | **11+** |
| **Analogous human age range** | 0-15 | 15-44 | 44-60 | 60+ |
| **Exemplary human age** | 5 | 30 | 50 | 70 |

The image of the human may help to draw an anthropomorphic connection between human aging, human diet, animal aging, and animal diet. For example, the image of the human may include the human engaged in activities stereotypically associated with the human life stage analogous to the animal life stage for which a given diet in the array is nutritionally tailored. The human activity may include eating an age-appropriate food. Some exemplary Human characteristics and/or activities are presented in Table 6.

**Table 6. Exemplary Human and Animal Characteristics in Various Life Stages**

| **Human age** | **Human characteristics** | **Human Food** | **Dog characteristics** | **Cat characteristics** |
|---|---|---|---|---|
| 5 (Puppy/Kitten) | Small build, playful, pigtails, "baby" fat, playing on swing set or playground, playing with toys | Milk Fruit CHEERIOS™ cereal | Playful, energy, dog may be in motion, walking, tumbling, curious expression | Playful, energy, cat may be in motion, walking, tumbling, curious expression |
| 30 (Adult) | Recreational athlete build /fit Professional, hard working | Sports drink bottle Performance nutrition bar (e.g., exercise recovery supplement) | Lean, working, active, walking briskly or running | Lean, active, standing in a windowsill or perched in a relatively high spot that would require jumping or climbing to reach, alert (ear posture showing awareness, looking out window or over perch); pouncing or stalking |
| 50 (Mature) | Graying hair, glasses, reduced activity Wrinkles | Water Nutritious snack bar (e.g., granola) Diet soda Low calorie foods and/or small portions | Routine tasks like getting paper, slippers; standing with wagging or lifted tail | Healthy but heavier than adult cat, sitting or perched in somewhat lower spot or in posture showing rest/lower alert; standing with raised or moving tail |
| 70 (Senior) | Gray, thinner Wrinkled | Protein shake or drink (such as ENSURE™ nutrition beverages) Protein bar | Content, slow stroll, with the family on the couch (e.g., he can still climb), soothing location but not ready to "retire", may be seated or reclining | Being held, visible stairs or other aids to get to bed or furniture, restful posture, may be seated or reclining |

The indicium includes an image of an animal. The life stage of the animal depicted in the indicium corresponds to the life stage of the animal for which the diet inside the package is nutritionally tailored. The image may include an image of a human engaged in an activity with an animal that is appropriate for the life stage of the animal. Some examples of life-stage appropriate activities are included in the table above. The images may convey healthy activities for humans and animals of different life stages. The human in the images may be presented as the same person throughout the array. That is, the human image in the various indicia may be styled to look like the same individual human at different life stages. The human in the images may be presented as different individual humans. Similarly, the animal may be the same or different (e.g., same or different breed, size, color, etc.) at different life stages.

The image of the human and/or animal may be of any suitable form and style. For example, the image may be a photograph of an actual human being (or animal), or a modified photograph, or a line drawing, painting, silhouette, cartoon, icon, graphic illustration, or the like. The model human (and/or animal) for the image may be real or imaginary. The impression created by the image may be realistic (as with an unaltered photograph) or impressionistic, detailed or simple, but the images, taken across the array, should communicate a change in the life stage of the human (and/or animal) on each package associated with a different animal life stage (the array could include multiple diets suitable for a single life stage, as well as different diets for different life stages).

The image of the human and/or animal may be aspirational. That is, the image may show the human and/or animal embodying the desired benefits of the diet with which the image is associated. For example, if a diet is designed, nutritionally, to support healthy hair and skin, the human and/or animal may visibly display full, lustrous hair and unblemished skin (to the degree the animal's skin is observable). As another example, if a diet is designed, nutritionally, to support healthy weight maintenance, the human and/or animal may visibly display a healthy weight. For example, the human may be depicted such that his or her weight can be observed or inferred, as by silhouette, and not in loose clothing or in postures which might make it difficult to observe or infer the human's weight.

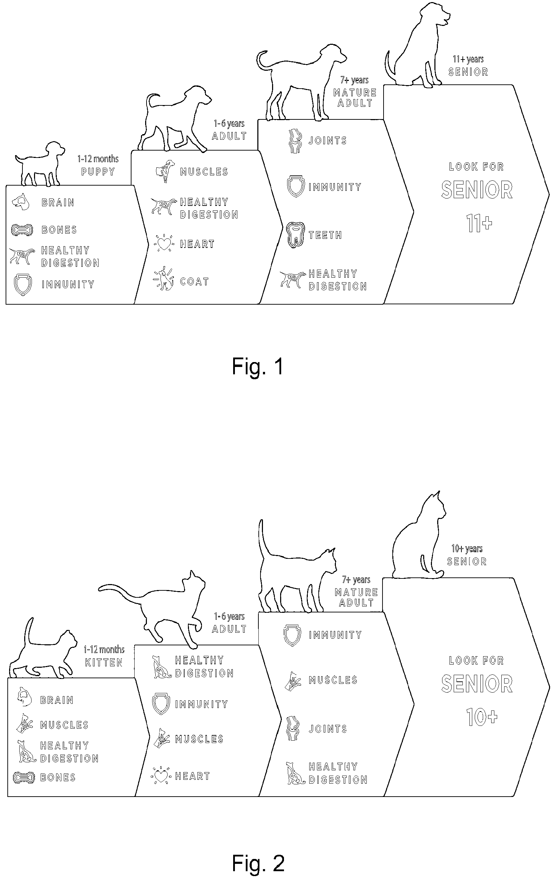

In one particular embodiment, the image of the animal is like those in FIG. 1. FIG. 1 shows a set of stairs of progressively greater height. Each stair represents a diet in an array of animal diets. Each stair is associated with a specific life stage. At the top of each stair is a silhouette or simplified image of a dog. As shown in FIG. 1, words and numbers are used to describe each life stage, however in some embodiments, only the image of the dog is used. Each stair may comprise one or more descriptors of the benefits or ingredients that differ in different life stage diets, and/or comprise one or more descriptors of the physiological or anatomical benefits which may accrue to an animal fed that specific life stage diet. In some embodiments, only the animal image and/or descriptors for a single stage are legible or easily visible. The other animal images and/or descriptors (but not the other stairs) may be absent or de-emphasized. For example, a single stair and/or animal image may be in color, while the other stairs and/or images are in black-and-white or grayscale, or a single stair and/or animal image may be in high resolution, while the other stairs and/or animal images are blurred or otherwise obscured. In some embodiments, the indicium of FIG. 1 provides an indication of all of the diets available in the array and an indication of which diet is contained in the package on which the indicium is disposed. FIG. 2 provides a similar image for an array of cat diets, which can be similarly modified as desired. Both FIG. 1 and FIG. 2 show the four stairs of varying colors, however, the number of stairs and the colors could be varied as desired. Of course, either image could be modified to reflect diets for other animals, such as, without limitation, ferrets, guinea pigs, rabbits, hamsters, mice, birds, reptiles, fish, primates, and the like.

The package itself may be a bag, box, jar, crate, can, pouch, or any suitable package. The package may contain the diet and prevent it from dispersing or leaking during transportation and storage (as if the diet is provided in bite-sized kibble or other relatively small, easily dispersed particles or aliquots, or in a wet form). The package may reduce or prevent the movement of moisture, air, or other substances between the inside and the outside of the package, as to reduce the likelihood that the diet inside the package will become stale, too dry, too moist, or contaminated during transportation and storage. The package may be resealable.

An array of diets, each of the diets nutritionally tailored to an animal life stage and disposed in a package, each package comprising an image of a human being in a life stage comparable to the animal life stage for which the diet is diet is tailored, may facilitate proper selection of age-appropriate animal diet. Such images may facilitate an anthropomorphic connection that allows a caregiver to understand age-related dietary needs in animals in a more personal, intuitive manner, and/or may help overcome an erroneous perception that mature or senior formulas are inappropriate for healthy, active, happy animals.

In some aspects, not pertaining to the invention, this disclosure relates to a method for facilitating the selection of a life-stage appropriate diet for an animal. The method may comprise providing an array of diets for an animal. The diets may be nutritionally tailored to a life stage of the animal. For example, as described above, one or more nutrients may be varied in level, proportion, or presence in different diets in the array, to account for changing nutritional needs in different life stages. The method may comprise associating each package in the array with an indicum. In this context, "associating" may be tangible or intangible, direct or indirect. For example, the package may be associated with an indicium by printing, gluing, stapling, stitching, laminating, or otherwise directly, physically joining the indicium to the package. The indicium may be indirectly, physically associated with the package. For example, the indicium may reside on a hang-tag or removable sticker disposed on the package. The indicium may be intangibly associated with the package. For example, the indicium may be connected to the package electronically, as by an RFID tag, internet address, bar code, mobile tag, "QR" code ("Quick Response" code, often used with smartphones and other mobile computing devices), or the like. However, in this context, an "association" cannot be purely mental or imaginary. For example, a package comprising words which might cause a consumer to imagine, in her own mind, a mature human being is not "associated" with an image of a mature human being by virtue of the words. The image of the human may be as described above in terms of characteristics, possible associated activities, and styles and forms.

The indicium may comprise an image of an animal in the life stage for which the diet inside the package is nutritionally tailored. The image may depict the human interacting with the animal in a manner associated with (or appropriate for) the life stage of the animal for which the diet inside the package is nutritionally tailored. Exemplary activities and animal characteristics are described above. The human and/or animal image may vary in style and form, as described above.

Various disclosures and embodiments have been described with regard to an animal diet. The animal diet may be a complete and nutritionally balanced food source for an animal. In some embodiments, the disclosures related to an animal diet may be applicable to other forms of animal feed, including, without limitation, supplements, treats, gravies or flavorants comprising nutrients, and the like. In addition to a nutrient, an array of diets as described herein may further comprise varied levels of palatants or flavorants as a means to drive varied voluntary intake levels, as an addition lever for delivering varied nutrient intake.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the scope of the invention.

## Claims

1. An array of diets for an animal, the array comprising:
a first diet comprising a first level of DHA suitable for a first life stage of said animal, the first diet disposed in a first package;
a second diet comprising a second level of DHA suitable for a second life stage of said animal, the second diet disposed in a second package; and
a third diet comprising a third level of DHA suitable for a third life stage of said animal, the third diet disposed in a third package;
wherein each of the first, second, and third packages comprises an indicium, and the indicium of the first package comprises an image of said animal in the first animal life stage, the indicium of the second package comprises an image of said in the second animal life stage, and the indicium of the third package comprises an image of said animal in the third animal life stage,
wherein the first level is higher than the second level, and wherein the third level is higher than the second level, and wherein either
the animal is a dog and the first level of DHA is 200-2000%, the second level of DHA is 50-90%, and the third level of DHA is 200-2000% of 0.01-0.10 mg/100g diet, and wherein the first diet further comprises 110-130% of 3300-3700 ME kcal/kg diet, 104-110% of 70-80g protein/1000 kcal ME, 20-70% of 280-500 IU/kg Vitamin E, 0-50% of 50-100 mg/kg diet supplemental L-carnitine, 1-20% of 20-40 mg/kg diet beta-carotene, 50-80% of 2-3% crude fiber and 70-90% of 2.5-4% beet pulp, the second diet further comprises 102-115% of 3300-3700 ME kcal/kg diet, 90-98% of 70-80g protein/1000 kcal ME, 20-70% of 280-500 IU/kg Vitamin E, 0-100% of 50-100 mg/kg diet supplemental L-carnitine, 1-20% of 20-40 mg/kg diet beta-carotene, 60-90% of 2-3% crude fiber and 60-90% of 2.5-4% beet pulp, and the third diet further comprises 102-110% of 3300-3700 ME kcal/kg diet, 102-110% of 70-80g protein/ 1000 kcal ME, 100-200% of 280-500 IU/kg Vitamin E, 100-200% of 50-100 mg/kg diet supplemental L-carnitine, 100-150% of 20-40 mg/kg diet beta-carotene, 90-140% of 2-3% crude fiber and 110-150% of 2.5-4% beet pulp
or wherein
the animal is a cat and the first level of DHA is 170-200%, the second level of DHA is 50-90%, and the third level of DHA is 150-250% of 0.06-0.16 mg/100g diet, and wherein the first diet further comprises 103-115% of 3500-3900 ME kcal/kg diet, 90-100% of 90-95 g protein/1000 kcal ME, 90-99% of 5-6 g lysine/1000 kcal ME, 35-60% of 475-550 IU/kg Vitamin E, 0-50% of 50 mg/kg diet supplemental L-carnitine, 100-115% of 1.5-1.8% crude fiber and 100-120% of 2.5-3% beet pulp, and wherein the second diet further comprises 100-105% of 3500-3900 ME kcal/kg diet, 95-100% of 90-95 g protein/1000 kcal ME, 95-100% of 5-6 g lysine/1000 kcal ME, 35-60% of 475-550 IU/kg Vitamin E, 0-100% of 50 mg/kg diet supplemental L-carnitine, 100-115% of 1.5-1.8% crude fiber and 100-120% of 2.5-3% beet pulp, and wherein the third diet further comprises 105-115% of 3500-3900 ME kcal/kg diet, 90-105% of 90-95 g protein/1000 kcal ME, 105-135% of 5-6 g lysine/1000 kcal ME, 100-200% of 475-550 IU/kg Vitamin E, 100-200% of 50 mg/kg diet supplemental L-carnitine, 105-130% of 1.5-1.8% crude fiber and 130-160% of 2.5-3% beet pulp.

2. The array of Claim 1, wherein at least one of the indicia further comprises an image of a human being in a life stage comparable to the animal life stage.

3. The array of Claim 2, wherein the indicium comprises the human being and the animal engaged in an activity characteristic of the animal life stage.

4. The array of any of the preceding claims, further comprising a fourth diet comprising a fourth level of the nutrient suitable for a fourth animal life stage, the fourth diet disposed in a fourth package, the fourth package comprising an indicium, the indicium comprising an image of an animal in the fourth animal stage of life.

5. The array of Claim 2, wherein the indicium of the first package, the indicium of the second package, and the indicium of the third package each comprise an image of the same human being.

6. The array of any of the preceding claims, wherein the indicium of the first package, the indicium of the second package, and the indicium of the third package each comprise an image of the same animal.

## Patentansprüche

1. Reihe von Diäten für ein Tier, wobei die Reihe umfasst:
eine erste Diät, die einen ersten Gehalt an DHA umfasst, der für eine erste Lebensphase des Tieres geeignet ist, wobei die erste Diät in einer ersten Verpackung bereitgestellt wird;
eine zweite Diät, die einen zweiten Gehalt an DHA umfasst, der für eine zweite Lebensphase des Tieres geeignet ist, wobei die zweite Diät in einer zweiten Verpackung bereitgestellt wird; und
eine dritte Diät, die einen dritten Gehalt an DHA umfasst, der für eine dritte Lebensphase des Tieres geeignet ist, wobei die dritte Diät in einer dritten Verpackung bereitgestellt wird;
wobei die erste, zweite und dritte Verpackung jeweils ein Kennzeichen umfasst und das Kennzeichen der ersten Packung ein Bild des Tieres in der ersten Lebensphase des Tieres umfasst, das Kennzeichen der zweiten Packung ein Bild des Tieres in der zweiten Lebensphase des Tieres umfasst und das Kennzeichen der dritten Packung ein Bild des Tieres in der dritten Lebensphase des Tieres umfasst,
wobei der erste Gehalt höher als der zweite Gehalt ist und wobei der dritte Gehalt höher als der zweite Gehalt ist und wobei entweder
das Tier ein Hund ist und der erste Gehalt an DHA 200-2000 %, der zweite Gehalt an DHA 50-90 % und der dritte Gehalt an DHA 200-2000 % von 0,01-0,10 mg pro 100 g Diät beträgt und wobei die erste Diät ferner 110-130 % 3300-3700 ME kcal pro kg Diät, 104-110 % von 70-80 g Protein pro 1000 kcal ME, 20-70 % von 280-500 IE Vitamin E pro kg, 0-50 % von 50-100 mg L-Carnitin als Nahrungsergänzungsmittel pro kg Diät, 1-20 % von 20-40 mg Beta-Carotin pro kg Diät, 50-80 % von 2-3 % Rohfaser und 70-90 % von 2,5-4 % Rübenschnitzel umfasst, die zweite Diät ferner 102-115 % von 3300-3700 ME kcal pro kg Diät, 90-98 % von 70-80 g Protein pro 1000 kcal ME, 20-70 % von 280-500 IE Vitamin E pro kg, 0-100 % von 50-100 mg L-Carnitin als Nahrungsergänzungsmittel pro kg Diät, 1-20 % von 20-40 mg Beta-Carotin pro kg Diät, 60-90 % von 2-3 % Rohfaser und 60-90 % von 2,5-4 % Rübenschnitzel umfasst und die dritte Diät ferner 102-110 % von 3300-3700 ME kcal pro kg Diät, 102-110 % von 70-80 g Protein pro 1000 kcal ME, 100-200 % von 280-500 IE Vitamin E pro kg, 100-200 % von 50-100 mg L-Carnitin als Nahrungsergänzungsmittel pro kg Diät, 100-150 % von 20-40 mg Beta-Carotin pro kg Diät, 90-140 % von 2-3 % Rohfaser und 110-150 % von 2,5-4 % Rübenschnitzel umfasst
oder wobei
das Tier eine Katze ist und der erste Gehalt an DHA 170-200 %, der zweite Gehalt an DHA 50-90 % und der dritte Gehalt an DHA 150-250 % von 0,06-0,16 mg pro 100 g Diät beträgt und wobei die erste Diät ferner 103-115 % von 3500-3900 ME kcal pro kg Diät, 90-100 % von 90-95 g Protein pro 1000 kcal ME, 90-99 % von 5-6 g Lysin pro 1000 kcal ME, 35-60 % von 475-550 IE Vitamin E pro kg, 0-50 % von 50 mg L-Carnitin als Nahrungsergänzungsmittel pro kg Diät, 100-115 % von 1,5-1,8 % Rohfaser und 100-120 % von 2,5-3 % Rübenschnitzel umfasst und wobei die zweite Diät ferner 100-105 % von 3500-3900 ME kcal pro kg Diät, 95-100 % von 90-95 g Protein pro 1000 kcal ME, 95-100 % von 5-6 g Lysin pro 1000 kcal ME, 35-60 % von 475-550 IE Vitamin E pro kg, 0-100 % von 50 mg L-Carnitin als Nahrungsergänzungsmittel pro kg Diät, 100-115 % von 1,5-1,8 % Rohfaser und 100-120 % von 2,5-3 % Rübenschnitzel umfasst und wobei die dritte Diät ferner 105-115 % von 3500-3900 ME kcal pro kg Diät, 90-105 % von 90-95 g Protein pro 1000 kcal ME, 105-135 % von 5-6 g Lysin pro 1000 kcal ME, 100-200 % von 475-550 IE Vitamin E pro kg, 100-200 % von 50 mg L-Carnitin als Nahrungsergänzungsmittel pro kg Diät, 105-130 % von 1,5-1,8 % Rohfaser und 130-160 % von 2,5-3 % Rübenschnitzel umfasst.

2. Reihe nach Anspruch 1, wobei mindestens eins der Kennzeichen ferner ein Bild eines Menschen in einer Lebensphase umfasst, die mit der Lebensphase eines Tieres vergleichbar ist.

3. Reihe nach Anspruch 2, wobei das Kennzeichen den Menschen und das Tier umfasst, die eine für die Lebensphase des Tieres charakteristische Tätigkeit ausüben.

4. Reihe nach einem der vorstehenden Ansprüche, ferner umfassend eine vierte Diät, die einen vierten Gehalt an dem für eine vierte Tierlebensphase geeigneten Nährstoff umfasst, wobei die vierte Diät in einer vierten Verpackung bereitgestellt wird, wobei die vierte Verpackung ein Kennzeichen umfasst, wobei das Kennzeichen ein Bild eines Tieres in der vierten Tierlebensphase umfasst.

5. Reihe nach Anspruch 2, wobei das Kennzeichen der ersten Verpackung, das Kennzeichen der zweiten Verpackung und das Kennzeichen der dritten Verpackung jeweils ein Bild desselben Menschen umfassen.

6. Reihe nach einem der vorstehenden Ansprüche, wobei das Kennzeichen der ersten Verpackung, das Kennzeichen der zweiten Verpackung und das Kennzeichen der dritten Verpackung jeweils ein Bild desselben Tieres umfassen.

## Revendications

1. Éventail de régimes alimentaires pour un animal, l'éventail comprenant :
un premier régime alimentaire comprenant un premier taux de DHA approprié pour un premier stade de développement dudit animal, le premier régime alimentaire disposé dans un premier conditionnement ;
un deuxième régime alimentaire comprenant un deuxième taux de DHA approprié pour un deuxième stade de développement dudit animal, le deuxième régime alimentaire disposé dans un deuxième conditionnement ; et
un troisième régime alimentaire comprenant un troisième taux de DHA approprié pour un troisième stade de développement dudit animal, le troisième régime alimentaire disposé dans un troisième conditionnement ;
dans lequel chacun des premier, deuxième et troisième conditionnements comprend une indication, et l'indication du premier conditionnement comprend une image dudit animal dans le premier stade de développement de l'animal, l'indication du deuxième conditionnement comprend une image dudit dans le deuxième stade de développement de l'animal, et l'indication du troisième conditionnement comprend une image dudit animal dans le troisième stade de développement de l'animal,
dans lequel le premier taux est supérieur au deuxième taux, et dans lequel le troisième taux est supérieur au deuxième taux, et dans lequel soit
l'animal est un chien et le premier taux de DHA est de 200 à 2000 %, le deuxième taux de DHA est de 50 à 90 %, et le troisième taux de DHA est de 200 à 2000 % de 0,01 à 0,10 mg/100 g de régime alimentaire, et dans lequel le premier régime alimentaire comprend en outre 110 à 130 % de 3300 à 3700 kcal ME/kg de régime alimentaire, 104 à 110 % de 70 à 80 g de protéine/1000 kcal ME, 20 à 70 % de 280 à 500 IU/kg de Vitamine E, 0 à 50 % de 50 à 100 mg/kg de régime alimentaire de L-carnitine de complément, 1 à 20 % de 20 à 40 mg/kg de régime alimentaire de bêta-carotène, 50 à 80 % de 2-3 % de fibre crue et 70 à 90 % de 2,5 à 4 % de pulpe de betterave, le deuxième régime alimentaire comprend en outre 102 à 115 % de 3300 à 3700 kcal ME/kg de régime alimentaire, 90 à 98 % de 70 à 80 g de protéine/1000 kcal ME, 20 à 70 % de 280 à 500 IU/kg de Vitamine E, 0 à 100 % de 50 à 100 mg/kg de régime alimentaire de L-carnitine de complément, 1 à 20 % de 20 à 40 mg/kg de régime alimentaire de bêta-carotène, 60 à 90 % de 2 à 3 % de fibre crue et 60 à 90 % de 2,5 à 4 % de pulpe de betterave, et le troisième régime alimentaire comprend en outre 102 à 110 % de 3300 à 3700 kcal ME/kg de régime alimentaire, 102 à 110 % de 70 à 80 g de protéine/1000 kcal ME, 100 à 200 % de 280 à 500 IU/kg de Vitamine E, 100 à 200 % de 50 à 100 mg/kg de régime alimentaire de L-carnitine de complément, 100 à 150 % de 20 à 40 mg/kg de régime alimentaire de bêta-carotène, 90 à 140 % de 2 à 3 % de fibre crue et 110 à 150 % de 2,5 à 4 % de pulpe de betterave
soit dans lequel
l'animal est un chat et le premier taux de DHA est de 170 à 200 %, le deuxième taux de DHA est de 50 à 90 %, et le troisième taux de DHA est de 150 à 250 % de 0,06 à 0,16 mg/100 g de régime alimentaire, et dans lequel le premier régime alimentaire comprend en outre 103 à 115 % de 3500 à 3900 kcal ME/kg de régime alimentaire, 90 à 100 % de 90 à 95 g de protéine/1000 kcal ME, 90 à 99 % de 5 à 6 g de lysine/1000 kcal ME, 35 à 60 % de 475 à 550 IU/kg de Vitamine E, 0 à 50 % de 50 mg/kg de régime alimentaire de L-carnitine de complément, 100 à 115 % de 1,5 à 1,8 % de fibre crue et 100 à 120 % de 2,5 à 3 % de pulpe de betterave, et dans lequel le deuxième régime alimentaire comprend en outre 100 à 105 % de 3500 à 3900 kcal ME/kg de régime alimentaire, 95 à 100 % de 90 à 95 g de protéine/1000 kcal ME, 95 à 100 % de 5 à 6 g de lysine/1000 kcal ME, 35 à 60 % de 475 à 550 IU/kg de Vitamine E, 0 à 100 % de 50 mg/kg de régime alimentaire de L-carnitine de complément, 100 à 115 % de 1,5 à 1,8 % de fibre crue et 100 à 120 % de 2,5 à 3 % de pulpe de betterave, et dans lequel le troisième régime alimentaire comprend en outre 105 à 115 % de 3500 à 3900 kcal ME/kg de régime alimentaire, 90 à 105 % de 90 à 95 g de protéine/1000 kcal ME, 105 à 135 % de 5 à 6 g de lysine/1000 kcal ME, 100 à 200 % de 475 à 550 IU/kg de Vitamine E, 100 à 200 % de 50 mg/kg de régime alimentaire de L-carnitine de complément, 105 à 130 % de 1,5 à 1,8 % de fibre crue et 130 à 160 % de 2,5 à 3 % de pulpe de betterave.

2. Éventail selon la revendication 1, dans lequel au moins l'une des indications comprend en outre une image d'un être humain dans un stade de développement comparable au stade de développement de l'animal.

3. Éventail selon la revendication 2, dans lequel l'indication comprend l'être humain et l'animal exerçant une activité caractéristique du stade de développement de l'animal.

4. Éventail selon l'une quelconque des revendications précédentes, comprenant en outre un quatrième régime alimentaire comprenant un quatrième taux du nutriment approprié pour un quatrième stade de développement de l'animal, le quatrième régime alimentaire disposé dans un quatrième conditionnement, le quatrième conditionnement comprenant une indication, l'indication comprenant une image d'un animal dans le quatrième stade de développement de l'animal.

5. Éventail selon la revendication 2, dans lequel l'indication du premier conditionnement, l'indication du deuxième conditionnement, et l'indication du troisième conditionnement comprennent chacune une image du même être humain.

6. Éventail selon l'une quelconque des revendications précédentes, dans lequel l'indication du premier conditionnement, l'indication du deuxième conditionnement, et l'indication du troisième conditionnement comprennent chacune une image du même animal.
